# EUROPÄISCHE PATENTSCHRIFT

(11) **EP 0 397 971 B1**
(45) Veröffentlichungstag und Bekanntmachung des Hinweises auf die Patenterteilung: **18.10.1995**
(21) Anmeldenummer: 90103522.0
(22) Anmeldetag: 23.02.1990
(51) Int. Cl.: B09B 3/00, B03B 9/06

(54) **Verfahren und Anlage zum umweltfreundlichen Totalrecycling von Kühlgeräten mit fluorkohlenwasserstoffhaltigen (FCKW) Schaumteilen, insbesondere Polyurethanschaumteilen (PU)**
Method and plant for the non-pollutant recycling of refrigerators with foam parts, containing fluorocarbons, in particular polyurethane
Procédé et installation pour le recyclage non polluant des réfrigérateurs avec des éléments en mousse, contenant des fluorocarbones, en particulier du polyuréthane

(30) Priorität: 23.02.1989 DE 3905610
(43) Veröffentlichungstag der Anmeldung: 22.11.1990
(73) Patentinhaber: Tönsmeier Entsorgung GmbH, D-32457 Porta Westfalica (DE)
(72) Erfinder: Linne, Werner, Dipl.-Ing., D-4952 Porta Westfalica (DE); Mönkhoff, Hans, D-3250 Hameln (DE)
(74) Vertreter: Stachow, Ernst-Walther, Prof. Dr.

(56) Entgegenhaltungen:
- DE-A- 2 850 130
- DE-U- 8 914 957
- US-A- 4 531 950
- US-A- 4 768 347

## Beschreibung

Die Erfindung betrifft ein Verfahren und eine Anlage zum umweltfreundlichen Totalrecycling von Kühlgeräten mit fluorkohlenwasserstoffhaltigen (FCKW) Schaumteilen, insbesondere Polyurethanschaumteilen (PU).

Die Entsorgung von Kühlgeräten beginnt heute mit der Sperrmüllabfuhr bzw. mit der Sammelabfuhr der Geräte. Die Kühlgeräte werden zu Müllverwertungsanlagen angeliefert und dort in herkömmlicher Weise verschrottet.

Die Verschrottung erfolgt ähnlich, wie es beispielsweise in der DE-A-2850130 beschrieben ist, nämlich durch herkömmliches Zerkleinern und soweit es möglich ist, anschließendes Trennen und Weiterverwerten der einzelnen Werkstoffe. Die Schaumstoffteile der Geräte bleiben hierbei völlig unbeachtet und somit natürlich auch der Inhalt der Poren der Schaumteile, meist ein Fluorkohlenwasserstoff, z.B. R 11.

Um vermeintlich den Umwelterfordernissen Rechnung zu tragen, wird bestenfalls vor der Verschrottung der Kühlgeräte das Kühlmittel aus dem Kühlaggregat abgesaugt. Die Schaumisolationsteile in den Kühlgeräten bleiben aber bei der Verschrottung völlig unbeachtet.

Nach heutigen Erkenntnissen jedoch besteht der Gesamtgehalt an Fluorkohlenwasserstoffen in einem Kühlgerät lediglich aus etwa einem Drittel flüssigen Fluorkohlenwasserstoffs im Kühlaggregat als Kühlmedium selbst und aus etwa zwei Dritteln Fluorkohlenwasserstoffs, der sich als Treibmittel in den Poren der Schaumstoffisolation der Kühlgeräte befindet.

Um die Dimension ermessen zu können, ist hierbei noch zu beachten, daß eine sehr große Menge, nämlich etwa 6 % der gesamten Fluorkohlenwasserstoffproduktion in Kühlgeräte geht.

Aus der US-A-4,531,950 sind ein Verfahren und eine Anlage zur Wiedergewinnung von Polymerschäumen bekannt, wobei der Schaum in einer Zerkleinerungsvorrichtung in eine zur Weiterverarbeitung geeignete Größe zerkleinert wird. Das dabei anfallende Gas wird durch einen Ventilator abgesaugt, durch einen Staubfilter geleitet und durch Aktivkohlefilter gereinigt. Von einer Anwendung eines solchen Verfahrens innerhalb eines Totalrecyclingverfahrens für Kühlgeräte mit fluorkohlenwasserstoffhaltigen Schaumteilen, das spezielle Anforderungen an diese Verfahrensschritte stellt und deren Koordinierung mit anderen Recyclingmaßnahmen erfordert, wurde bisher abgesehen.

Der Erfindung liegt deshalb die Aufgabe zugrunde, bei der Entsorgung und Verschrottung von Kühlgeräten dafür Sorge zu tragen, daß, um den gestiegenen und zwingend notwendigen Umwelterfordernissen zu entsprechen, nahezu der gesamte sich in dem Kühlgerät befindliche Fluorkohlenwasserstoff, ohne in die Umwelt zu gelangen und dadurch die Atmosphäre zu schädigen, entsorgt werden kann.

Diese Aufgabe wird durch ein Verfahren zum umweltfreundlichen Totalrecycling von Kühlgeräten mit fluorkohlenwasserstoffhaltigen (FCKW) Schaumteilen, insbesondere Polyurethanschaumteilen (PU), bei dem die Kühlgeräte zu einer Aufgabestation von einer oder mehreren Vorbereitungsstraßen angeliefert werden, die aus einer Aufgabestation, einem Kipptisch, einer Demontagestation und einem automatischen Übergabeband bestehen, bei dem die Kühlgeräte dann von der Aufgabestation zu dem Kipptisch mit Absaugstation transportiert werden, bei dem mittels des Kipptisches und der Absaugstation aus dem Motor und dem Kühlaggregat das Öl und der Fluorkohlenwasserstoff abgesaugt werden und ggf. voneinander getrennt werden, bei dem dann das Kühlgerät zur Demontagestation weiterbefördert wird, bei dem in der Demontagestation von dem Kühlgerät verschiedene Bauteile, z. B. Motor, Kühlaggregat, Quecksilberschalter, Buntmetalle, Aluminium, abmontiert und ggf. dem weiteren Recycling zugeführt werden, bei dem das teilrecyclierte Kühlgerät bei mehreren Vorbereitungsstraßen dann auf das automatische Übergabeband befördert wird, von dem es sofort oder nach einer gewissen Pufferzeit einem Querfahrwagen zugeführt wird, der gesteuert die Vorbereitungsstraßen bedient, bei dem mittels des Querfahrwagens das Kühlgerät auf ein Zuführband gefördert wird, bei dem mittels des Zuführbandes das Kühlgerät in eine abgekapselte Bearbeitungskammer gefördert wird, bei dem das Kühlgerät in der abgekapselten Bearbeitungskammer in einer ersten Grobzerkleinerungseinrichtung in faustgroße Stücke zerteilt wird, bei dem in einer darauffolgenden Feinzerkleinerungseinrichtung die grob zerteilten Stücke in kleinere, eigroße Stücke zerteilt werden, bei dem dann in einem ersten Abscheider magnetische Metallteile abgeschieden werden, bei dem dann in einem zweiten Abscheider nichtmagnetische Metallteile abgeschieden werden, bei dem dann in einer Entleerungsstation die Poren der verbleibenden Schaumteile durch Kompression der Schaumteile von Fluorkohlenwasserstoffen befreit und die Schaumteile dann weiterbehandelt, z. B. brikettiert werden, bei dem in der abgekapselten Bearbeitungskammer durch Absaugdüsen die während der Zerkleinerung und der weiteren Vorgänge freiwerdenden Fluorkohlenwasserstoffgase abgesaugt werden, bei dem die abgesaugten Gase in einem Staubfilter grob gereinigt werden und bei dem dann die grob gereinigten Gase in einer Luftreinigungsanlage von den Fluorkohlenwasserstoffgasen befreit werden.

Zur Durchführung dieses Verfahrens löst die Aufgabe eine Anlage zum umweltfreundlichen Totalrecycling von Kühlgeräten mit fluorkohlenwasserstoffhaltigen (FCKW) Schaumteilen, insbesondere Polyurethanschaumteilen (PU), zur Durchführung des Verfahrens nach Anspruch 1, mit einer oder mehreren Vorbereitungsstraßen, die jeweils bestehen aus einer Aufgabestation, einem Kipptisch, mit zugeordneter Absaugstation, einer Demontagestation, einem automatischen Übergabeband, mit oder ohne Pufferfunktion, wobei anschließend an die Vorbereitungsstraßen ein Querfahrwagen zur Abnahme der von den einzelnen Übergabebändern angelieferten Kühlgeräte und zum Weitertransport zu einem Zuführband folgt, wobei im Anschluß an das Zuführband eine im wesentlichen abgekapselte Bearbeitungskammer folgt, in der nacheinander angeordnet sind eine erste Grobzerkleinerungseinrichtung, eine zweite Feinzerkleinerungseinrichtung, ein erster Abscheider für magnetische Metallteile, ein zweiter Abscheider für nichtmagnetische Metallteile, eine Entleerungsstation für die fluorkohlenwasserstoffhaltigen Poren durch Kompression der Schaumteile und eine Weiterbehandlungsstation, und wobei die abgekapselte Bearbeitungskammer ausgerüstet ist mit einer Luftreinigungsanlage, deren Absaugdüsen entlang der Bearbeitungsstrecke angeordnet sind.

Vorteilhafte Ausgestaltungen sind in den Unteransprüchen beschrieben.

Der besondere Vorteil entsteht dadurch, daß die gesamte mechanische Zerkleinerung der Kühlgeräte und die Weiterbehandlung der nach dem Abscheiden der Metalle verbleibenden Kunststoffreste in einer abgekapselten Bearbeitungskammer stattfindet und diese Bearbeitungskammer mit einer Luftreinigungsanlage ausgestattet ist, so daß es erstmals möglich geworden ist, beispielsweise einen Kühlschrank vollständig dem Recycling zuzuführen, und zwar im wesentlichen ohne irgendeine Verschmutzung der Atmosphäre. Dieses Totalrecycling beginnt bei der Demontage von Motor und Kühlaggregaten, bei der Demontage von Aluminiumteilen, Quecksilberschaltern und Buntmetallen bis hin zum Recycling der verbleibenden magnetischen bzw. nichtmagnetischen Metallteile und der Rückführung beispielsweise von dem kompaktierten Polyurethanschaum, bei gleichzeitiger nahezu vollständiger Rückgewinnung der Fluorkohlenwasserstoffe.

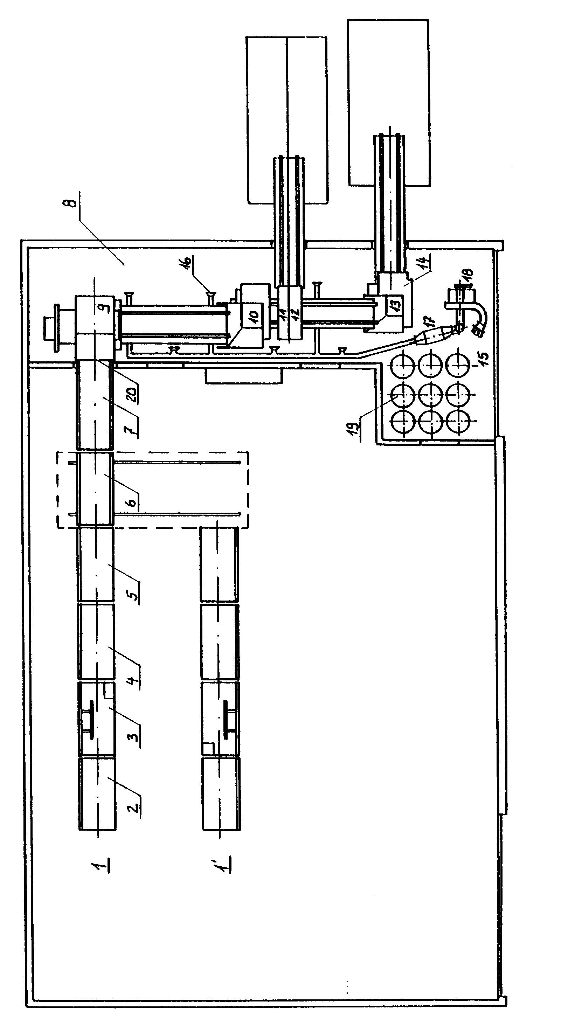

In der Figur ist schematisch ein Beispiel einer Anlage zum umweltfreundlichen Totalrecycling von Kühlgeräten mit fluorkohlenwasserstoffhaltigen (FCKW) Schaumteilen, insbesondere Polyurethanschaumteilen (PU) dargestellt.

Die Kühlgeräte, z.B. Kühlschränke werden von den zuständigen Sperrmüllabfuhrfirmen an eine oder mehrere Vorbereitungsstraßen (1, 1') angeliefert. Dort werden sie zur Aufgabestation (2) überführt und von dieser dann dem Kipptisch (3) mit der zugeordneten Absaugstation übergeben. Der Kipptisch ist kardanisch gelagert, so daß in der Absaugstation alle Reste von Öl und Kühlmedium durch Schwenkbewegung des Kipptisches und somit des Kühlgerätes aus diesem entfernt werden können. Bereits an dieser Absaugstation kann eine Trennung von Motoröl und Fluorkohlenwasserstoff als Kühlmedium erfolgen.
Vom Kipptisch wird das Kühlgerät der Demontagestation (4) zugeführt. In der Demontagestation werden von Hand der Motor und das Kühlaggregat entfernt. Weiterhin entfernt werden alle Aluminiumteile, die Quecksilberschalter und alle Buntmetalle.
Diese Teile werden bereits von dieser Station dem weiteren Recycling zugeführt.

Von der Demontagestation gelangt das Kühlgerät auf das automatische Übergabeband (5). Je nach Menge der anfallenden Kühlgeräte auf den automatischen Übergabebändern der verschiedenen Vorbereitungsstraßen (1, 1') wird dort das Kühlgerät entweder direkt dem Querfahrwagen (6) übergeben oder in Art einer Pufferfunktion auf dem Übergabeband solange gespeichert, bis der Querfahrwagen (6) das Kühlgerät übernimmt.
Der Querfahrwagen (6) verbringt das Kühlgerät gesteuert auf das Zuführband (7), welches das Kühlgerät überführt in die Bearbeitungskammer (8). In der Bearbeitungskammer (8) findet in der Grobzerkleinerungseinrichtung (9) die erste Zerkleinerung des Kühlgerätes in faustgroße Stücke statt. Die Grobzerkleinerungseinrichtung (9) ist ein langsamlaufender Shredder. Von dieser Grobzerkleinerungseinrichtug (9) werden die faustgroßen Stücke der Feinzerkleinerungseinrichtung (10) zugeführt. Die Feinzerkleinerungseinrichtung (10) zerkleinert die Teile in eigroße Stücke. Diese eigroßen Stücke werden überführt in einen ersten Abscheider für magnetische Metallteile. Die magnetischen Metallteile werden aussortiert und in einen Container verbracht. Die verbleibenden Teile werden in einem zweiten Abscheider (12) noch von den nichtmagnetischen Metallteilen befreit. Diese nichtmagnetischen Metallteile werden ebenfalls in einen Container verbracht.

Die verbleibenden, nun hauptsächlich aus Polyurethanschaum bestehenden Teile werden in eine Entleerungsstation (13) für die fluorkohlenwasserstoffhaltigen Poren der Schaumteile verbracht. In einer derartigen Entleerungsstation (13) wird beispielsweise durch Zusammenpressen der Schaumteile das Fluorkohlenwasserstoffgas aus den Poren herausgepreßt. In einer Weiterbehandlungsstation (14) kann dann eine Kompaktierung der Schaumteile erfolgen, wobei dann die beispielsweise brikettförmig verbleibenden Kunststoffteile wiederum in einen Container entsorgt werden. Die Entleerungsstation und die Weiterbehandlungsstation können auch eine zusammengefaßte Einheit, z.B. eine Brikettierstation sein.

Die sich durch die Bearbeitungsvorgänge in der Bearbeitungskammer (8) befindlichen Fluorkohlenwasserstoffgase werden durch eine Luftreinigungsanlage (15) beseitigt. Die Luftreinigungsanlage kann bespielsweise Aktivkohlefilter (19) aufweisen, in denen die Fluorkohlenwasserstoffgase gesammelt und der Rückgewinnung zugänglich gemacht werden. Die Absaugdüsen (16) der Luftreinigungsanlage befinden sich in Bodennähe, da die Fluorkohlenwasserstoffgase aufgrund ihres spezifischen Gewichtes zum Boden absinken und von dort am effektivsten abgesaugt werden können. Nach den Absaugdüsen ist ein Staubfilter angeordnet, in dem Grobpartikel aus dem Gasstrom entfernt werden. Die Gasbewegung in der Luftreinigungsanlage besorgt ein Ventilator (18).

Die Bearbeitungskammer (8) ist normalerweise vollautomatisch betreibbar, so daß sich dort keine Mitarbeiter aufhalten müssen und somit für die Mitarbeiter des Betriebes keine Gesundheitsgefahr zu befürchten ist. Sollten Störungen in der Bearbeitungskammer (8) auftreten oder zur Wartung, so ist die Möglichkeit vorgesehen, bevor die Mitarbeiter die Bearbeitungskammer (8) betreten, die Absaugung verstärkt zu betreiben, bis der Fluorkohlenwasserstoffgasgehalt in der Bearbeitungskammer auf ein für die Mitarbeiter unschädliches Minimum gesenkt werden kann.

## Patentansprüche

1. Verfahren zum umweltfreundlichen Totalrecycling von Kühlgeräten mit fluorkohlenwasserstoffhaltigen (FCKW) Schaumteilen, insbesondere Polyurethanschaumteilen (PU),
bei dem die Kühlgeräte zu einer Aufgabestation von einer oder mehreren Vorbereitungsstraßen angeliefert werden, die aus einer Aufgabestation, einem Kipptisch, einer Demontagestation und einem automatischen Übergabeband bestehen,
bei dem die Kühlgeräte dann von der Aufgabestation zu dem Kipptisch mit Absaugstation transportiert werden,
bei dem mittels des Kipptisches und der Absaugstation aus dem Motor und dem Kühlaggregat das Öl und der Fluorkohlenwasserstoff abgesaugt werden und ggf. voneinander getrennt werden,
bei dem dann das Kühlgerät zur Demontagestation weiterbefördert wird,
bei dem in der Demontagestation von dem Kühlgerät verschiedene Bauteile, z. B. Motor, Kühlaggregat, Quecksilberschalter, Buntmetalle, Aluminium, abmontiert und ggf. dem weiteren Recycling zugeführt werden,
bei dem das teilrecyclierte Kühlgerät bei mehreren Vorbereitungsstraßen dann auf das automatische Übergabeband befördert wird, von dem es sofort oder nach einer gewissen Pufferzeit einem Querfahrwagen zugeführt wird, der gesteuert die Vorbereitungsstraßen bedient,
bei dem mittels des Querfahrwagens das Kühlgerät auf ein Zuführband gefördert wird,
bei dem mittels des Zuführbandes das Kühlgerät in eine abgekapselte Bearbeitungskammer gefördert wird,
bei dem das Kühlgerät in der abgekapselten Bearbeitungskammer in einer ersten Grobzerkleinerungseinrichtung in faustgroße Stücke zerteilt wird,
bei dem in einer darauffolgenden Feinzerkleinerungseinrichtung die grob zerteilten Stücke in kleinere, eigroße Stücke zerteilt werden,
bei dem dann in einem ersten Abscheider magnetische Metallteile abgeschieden werden,
bei dem dann in einem zweiten Abscheider nichtmagnetische Metallteile abgeschieden werden,
bei dem dann in einer Entleerungsstation die Poren der verbleibenden Schaumteile durch Kompression der Schaumteile von Fluorkohlenwasserstoffen befreit und die Schaumteile dann weiterbehandelt, z. B. brikettiert werden,
bei dem in der abgekapselten Bearbeitungskammer durch Absaugdüsen die während der Zerkleinerung und der weiteren Vorgänge freiwerdenden Fluorkohlenwasserstoffgase abgesaugt werden, und
bei dem die abgesaugten Gase in einem Staubfilter grob gereinigt werden und bei dem dann die grob gereinigten Gase in einer Luftreinigungsanlage von den Fluorkohlenwasserstoffgasen befreit werden.

2. Anlage zum umweltfreundlichen Totalrecycling von Kühlgeräten mit fluorkohlenwasserstoffhaltigen (FCKW) Schaumteilen, insbesondere Polyurethanschaumteilen (PU), zur Durchführung des Verfahrens nach Anspruch 1,
mit einer oder mehreren Vorbereitungsstraßen (1, 1'), die jeweils bestehen aus:
- einer Aufgabestation (2),
- einem Kipptisch (3), mit zugeordneter Absaugstation,
- einer Demontagestation (4),
- einem automatischen Übergabeband (5), mit oder ohne Pufferfunktion,
wobei anschließend an die Vorbereitungsstraßen (1, 1') ein Querfahrwagen (6) zur Abnahme der von den einzelnen Übergabebändern (5) angelieferten Kühlgeräte und zum Weitertransport zu einem Zuführband (7) folgt,
wobei im Anschluß an das Zuführband (7) eine im wesentlichen abgekapselte Bearbeitungskammer (8) folgt, in der nacheinander angeordnet sind:
- eine erste Grobzerkleinerungseinrichtung (9),
- eine zweite Feinzerkleinerungseinrichtung (10),
- ein erster Abscheider (11) für magnetische Metallteile,
- ein zweiter Abscheider (12) für nichtmagnetische Metallteile,
- eine Entleerungsstation (13) für die fluorkohlenwasserstoffhaltigen Poren durch Kompression der Schaumteile und
- eine Weiterbehandlungsstation (14),
und wobei die abgekapselte Bearbeitungskammer (8) ausgerüstet ist mit einer Luftreinigungsanlage (15), deren Absaugdüsen (16) entlang der Bearbeitungsstrecke angeordnet sind.

3. Anlage nach Anspruch 2, wobei die Luftreinigungsanlage (15) aus einem Staubfilter (17), einem Ventilator (18) und aus Aktivkohlefiltern (19) oder dergleichen zur Schaumtreibmittel-Rückgewinnung besteht.

4. Anlage nach Anspruch 2, bei der die Grobzerkleinerungseinrichtung (9) ein langsamlaufender Shredder zur Erzeugung etwa faustgroßer Stücke ist.

5. Anlage nach Anspruch 2, bei der die Feinzerkleinerungseinrichtung (10) ein langsamlaufender Shredder zur Erzeugung etwa eigroßer Stücke ist.

6. Anlage nach Anspruch 2, bei der die Absaugdüsen (16) im Bodenbereich angeordnet sind.

7. Anlage nach Anspruch 2, bei der der erste Abscheider (11) ein Überbandmagnet ist.

8. Anlage nach Anspruch 2, bei der zum Verschließen der Bearbeitungskammer (8) zwischen dem Zuführband (7) und der Grobzerkleinerungseinrichtung (9) eine gesteuerte Tür (20) angeordnet ist.

9. Anlage nach Anspruch 2, bei der die Weiterbehandlungsstation (14) eine Brikettierstation ist.

10. Anlage nach Anspruch 2, bei der die Entleerungsstation (13) und die Weiterbehandlungsstation (14) eine zusammengefaßte Einheit sind.

## Claims

1. Process for the environmentally-friendly complete recycling of cooling devices comprising foam components containing fluorohydrocarbons, in particular polyurethane foam components (PU),
wherein the cooling devices are delivered to a processing station of one or more preparation lanes, which consist of a processing station, a tilting table, a dismantling station and an automatic transfer conveyor,
wherein the cooling devices are then transported from the processing station to the tilting table comprising a extraction station,
wherein, by means of the tilting table and the extraction station, the oil and the fluorohydrocarbon are extracted from the motor and the cooling device and, optionally, separated from one another,
wherein the cooling device is then transported further to the dismantling station,
wherein various components of the cooling device, e.g. motor, refrigeration unit, mercury switch, nonferrous heavy metals, and aluminium, are removed and optionally sent on for further recycling,
wherein the partially recycled cooling device is then, in the case of a plurality of preparation lanes, transported on the automatic transfer conveyor, by which it is conducted, either immediately or after a certain buffer time, to a transversely travelling carriage, which supplies the preparation lanes in a controlled manner,
wherein, by means of the transversely travelling carriage, the cooling device is transported on a supply conveyor,
wherein, by means of the supply conveyor, the cooling device is transported into an enclosed processing chamber,
wherein the cooling device is broken down into fist-sized pieces in the enclosed processing chamber in a first coarse reduction device,
wherein the pieces which have been coarsely broken down are broken down into smaller, egg-sized pieces in a subsequent fine reduction device,
wherein magnetic metal components are then separated in a first separator,
wherein non-magnetic metal components are then separated in a second separator,
wherein fluorohydrocarbons are then removed from the pores of the remaining foam components in an emptying station by compression of the foam components and the foam components are then subjected to further treatment, e.g. formed into briquettes,
wherein the fluorohydrocarbons which were released during the reduction and the further processes are extracted by extraction nozzles in the enclosed processing chamber, and
wherein the gases which have been extracted are coarsely cleaned in a dust filter and wherein the flourohydrocarbons are then removed from the coarsely cleaned gases in an air cleaning system.

2. System for the environmentally-friendly complete recycling of cooling devices comprising foam components containing fluorohydrocarbons, in particular polyurethane foam components (PU), for performing the process according to Claim 1,
comprising one or more preparation lanes (1,1'), each of which consists of:
- a processing station (2),
- a tilting table (3), comprising an associated extraction station,
- a dismantling station (4),
- an automatic transfer conveyor (5), with or without a buffer function,
wherein, subsequently, a transversely travelling carriage (6) for removing the cooling devices supplied by the individual transfer conveyors (5) and for the further transport to a supply conveyor (7) follows the preparation lanes (1,1'),
wherein, connected to the supply conveyor (7), there follows a substantially enclosed processing chamber (8), in which there are disposed, one after the other:
- a first coarse reduction device (9),
- a second fine reduction device (10),
- a first separator (11) for magnetic metal components,
- a second separator (12) for non-magnetic metal components,
- an emptying station (13) for the pores containing fluorohydrocarbon by means of compressing the foam components, and
- a further treatment station (14),
and wherein the enclosed processing chamber (8) is provided with an air-cleaning system (15), the extraction nozzles (16) of which are arranged along the processing path.

3. System according to Claim 2, wherein the air-cleaning system (15) consists of a dust filter (17), a ventilator (18) and activated charcoal filters (19) or the like for recovery the propellant from the foam.

4. System according to Claim 2, wherein the coarse reduction device (9) is a slow-speed shredder for the production of approximately fist-sized pieces.

5. System according to Claim 2, wherein the fine reduction device (10) is a slow-speed shredder for the production of approximately egg-sized pieces.

6. System according to Claim 2, wherein the extraction nozzles (16) are disposed in the floor area.

7. System according to Claim 2, wherein the first separator (11) is a magnet above the conveyor.

8. System according to Claim 2, wherein a controlled door (20) for closing the processing chamber is disposed between the supply conveyor (7) and the coarse reduction device (9).

9. System according to Claim 2, wherein the further treatment station (14) is a briquette-forming station.

10. System according to Claim 2, wherein the emptying station (13) and the further treatment station (14)are a combined unit.

## Revendications

1. Procédé de recyclage total non-polluant de réfrigérateurs qui comportent des éléments en mousse contenant des hydrocarbures fluorés (HCF), en particulier des éléments en mousse de polyuréthanne (PU),
dans lequel les réfrigérateurs sont livrés à un poste de chargement d'une ou plusieurs chaînes de préparation qui se composent d'un poste de chargement, d'une table culbutante, d'un poste de démontage et d'une bande de transfert automatique,
dans lequel les réfrigérateurs sont ensuite transportés du poste de chargement vers la table basculante à laquelle est adjoint un poste d'aspiration,
dans lequel l'huile et l'hydrocarbure fluoré sont aspirés du moteur et du groupe frigorifique, au moyen de la table culbutante et du poste d'aspiration, et sont éventuellement séparés l'un de l'autre,
dans lequel le réfrigérateur est ensuite transporté dans le poste de démontage,
dans lequel différents composants, par exemple le moteur, le groupe frigorifique, les interrupteurs basculants à mercure, les métaux lourds non ferreux, l'aluminium, sont démontés du régrigérateur dans le poste de démontage et sont éventuellement dirigés vers le recyclage ultérieur,
dans lequel le réfrigérateur partiellement recyclé est ensuite transporté, dans le cas où il est prévu plusieurs chaînes de préparation, sur la bande de transfert automatique, d'où il est dirigé, aussitôt ou après un certain temps tampon, vers un chariot circulant transversalement qui dessert sur commande les chaînes de préparation,
dans lequel le réfrigérateur est transporté, au moyen du chariot circulant transversalement, sur une bande d'amenée,
dans lequel le réfrigérateur est transporté, au moyen de la bande d'amenée, dans une chambre hermétiquement fermée de traitement,
dans lequel le réfrigérateur est fragmenté, dans la chambre hermétiquement fermée de traitement, en morceaux de la grosseur du poing dans un premier dispositif de concassage grossier,
dans lequel les morceaux grossiers sont brisés en plus petits morceaux de la taille d'un oeuf dans un dispositif de concassage fin placé à la suite,
dans lequel les éléments en métal magnétique sont ensuite séparés dans un premier séparateur,
dans lequel les éléments en métal non magnétique sont ensuite séparés dans un second séparateur,
dans lequel les pores des éléments en mousse qui restent sont ensuite vidés des hydrocarbures fluorés par compression de ces éléments dans un poste de vidage, puis les éléments en mousse sont soumis à un traitement ultérieur, par exemple d'agglomération,
dans lequel les gaz d'hydrocarbures fluorés, libérés au cours du concassage et des opérations suivantes, sont aspirés par des buses d'aspiration dans la chambre hermétiquement fermée de traitement, et
dans lequel les gaz aspirés sont épurés grossièrement dans un filtre à poussières, puis les gaz épurés grossièrement sont débarrassés des gaz d'hydrocarbures fluorés dans une installation d'épuration d'air.

2. Installation de recyclage total non-polluant de réfrigérateurs qui comportent des éléments en mousse contenant des hydrocarbures fluorés (HCF), en particulier des éléments en mousse de polyuréthanne (PU), pour l'exécution du procédé selon la revendication 1,
comprenant une ou plusieurs chaînes de préparation (1,1') qui se composent chacune
- d'un poste de chargement (2),
- d'une table culbutante (3) à laquelle est adjoint un poste d'aspiration,
- d'un poste de démontage (4),
- d'une bande de transfert automatique (5) avec ou sans fonction tampon,
dans laquelle un chariot circulant transversalement (6) est disposé à la suite des chaînes de préparation (1,1') pour recevoir les réfrigérateurs livrés par les différentes bandes de transfert (5) et les diriger vers une bande d'amenée (7),
dans laquelle une chambre de traitement (8) fermée de façon pratiquement hermétique fait suite à la bande d'amenée (7) et contient successivement
- un premier dispositif de concassage grossier (9),
- un second dispositif de concassage fin (10),
- un premier séparateur (11) pour les éléments en métal magnétique,
- un second séparateur (12) pour les éléments en métal non magnétique,
- un poste de vidage (13) pour vider les pores contenant des hydrocarbures fluorés par compression des éléments en mousse, et
- un poste de traitement ultérieur (14),
et dans laquelle la chambre hermétiquement fermée de traitement (8) est équipée d'une installation d'épuration d'air (15) dont les buses d'aspiration (16) dont disposées le long du trajet de traitement.

3. Installation selon la revendication 2, dans laquelle l'installation d'épuration d'air (15) se compose d'un filtre à poussières (17), d'un ventilateur (18) et de filtres à charbon actif (19) ou similaires pour la récupération de l'agent de gonflement de la mousse.

4. Installation selon la revendication 2, dans laquelle le dispositif de concassage grossier (9) est un déchiqueteur à faible vitesse , produisant des morceaux ayant à peu près la grosseur du poing.

5. Installation selon la revendication 2, dans laquelle le dispositif de concassage fin (10) est un déchiqueteur à faible vitesse , produisant des morceaux ayant à peu prés la taille d'un oeuf.

6. Installation selon la revendication 2, dans laquelle les buses d'aspiration (16) sont disposées dans la région du sol.

7. Installation selon la revendication 2, dans laquelle le premier séparateur (11) est un séparateur suspendu à systeme magnétique et bande supérieure.

8. Installation selon la revendication 2, dans laquelle une porte commandée (20) est disposée entre la bande d'amenée (7) et le dispositif de concassage grossier (9) pour la fermeture de la chambre de traitement (8).

9. Installation selon la revendication 2, dans laquelle le poste de traitement ultérieur (14) est un poste d'agglomération.

10. Installation selon la revendication 2, dans laquelle le poste de vidage (13) et le poste de traitement ultérieur (14) sont réunis en un groupe.
